Europäisches Patentamt

European Patent Office

Office européen des brevets

(11) Veröffentlichungsnummer: **0 355 401**

**A1**

## EUROPÄISCHE PATENTANMELDUNG

(21) Anmeldenummer: **89113276.3**

(22) Anmeldetag: **19.07.89**

(51) Int. Cl.⁴ **H02B 1/38** , **E06B 3/36**

(30) Priorität: **19.08.88 DE 3828288**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **Knürr Mechanik für die Elektronik AG**
**Schatzbogen 29**
**D-8000 München 82(DE)**

(72) Erfinder: **Knürr, Hans**
**Dieselstrasse 4**
**D-8011 Kirchheim(DE)**

(74) Vertreter: **Weber, Otto Ernst, Dipl.-Phys. et al**
**Weber & Heim Hofbrunnstrasse 36**
**D-8000 München 71(DE)**

(54) **Gehäuseschrank.**

(57) Es wird ein Profilrahmen einer Flügeltür und des zugehörigen gehäuseseitigen Türrahmens für einen Gehäuseschrank beschrieben. Das Profil des gehäuseseitigen und anschlagseitigen Vertikalholms weist einen über Eck nach außen offenen Hohlraum auf, der an seinen Stirnseiten von Lageraugen überdeckt wird, die an den Horizontalholmen angeordnet sind. Der zugehörige türseitige Vertikalholm ist mit einem kreisbogenförmigen Ansatz versehen, der sich in Längsrichtung zwischen den Lageraugen erstreckt und der ferner außenbündig in die Ausnehmung des gehäuseseitigen Vertikalholms integriert ist. Der kreisbogenförmige Ansatz ist ferner koaxial zu den Lageraugen und nimmt die dort gelagerten Scharnierbolzen auf. Der riegelseitige Vertikalholm der Flügeltür ist bevorzugt mit einem Klappriegel versehen, der über die gesamte Länge des Vertikalholms mit einer gehäuseseitigen Schulter zusammenwirkt und der über einen Exzenterriegel betätigt wird.

Fig. 1

## Gehäuseschrank

Die Erfindung betrifft einen Gehäuseschrank mit einer Flügeltür, beispielsweise zur Aufnahme von elektronischen Baueinheiten, mit einem gehäuseseitigen Türrahmen zur Begrenzung einer Türöffnung, bestehend aus je zwei Vertikal- und Horizontalholmen mit einem Hohlprofil, mit einem am Türrahmen angelenkten türseitigen Flügelrahmen, bestehend aus je zwei türseitigen Vertikal- und Horizontalholmen mit einem Hohlprofil sowie mit einer im Türspalt umlaufenden Dichtungsvorrichtung.

Derartige Gehäuseschränke werden auf vielen technischen Gebieten eingesetzt. Sie können zur Aufnahme von elektronischen, elektrischen und elektromechanischen Baueinheiten dienen, wobei ihre Abmessungen üblicherweise genormt sind oder anderen herstellerübergreifenden Vereinbarungen folgen. Ein derartiges Maßsystem stellt beispielsweise das 19"-System dar. Die Flächen sind mit Abdeckplatten geschlossen.

Insbesondere wenn hochwertige Baueinheiten aufgenommen sind, ist man bestrebt, den Gehäuseschrank staubdicht abzuschließen. Auch eine Hochfrequenz-Abschirmung kann erforderlich sein. Zu diesem Zweck versieht man die Berührungsflächen aneinanderliegender Teile mit einem weichen Dichtungsmaterial, um Unebenheiten und Bauteiltoleranzen zu überbrücken und somit eine geschlossene Berührungsfläche zu erreichen. Verbessert kann dies noch dadurch werden, daß eine das Dichtungsmaterial beaufschlagende Kante vorhanden ist, um den Anpreßdruck örtlich begrenzt stark zu erhöhen.

Besondere Aufmerksamkeit muß hierbei dem Türspalt geschenkt werden. Obwohl man bereits eine Reihe von guten Lösungen gefunden hat, können Anwendungsfälle auftreten, wo sie nicht vollbefriedigen. Beispielsweise erfordern manche Rahmenkonstruktionen zusätzliche versteifende Elemente, um ein Nachgeben des Türrahmens und damit verbundenes Aufspreizen des Türspaltes zu unterbinden. Es müssen auch bei langen Dichtstrecken mehrere Riegel und Scharniere angeordnet werden, um den erforderlichen gleichmäßigen Anpreßdruck zu erreichen. Separate Bauteile erfordern einerseits zusätzlichen Montageaufwand und andererseits beanspruchen sie Einbauraum. Außen aufgesetzte Scharniere sind ferner gegen unbefugtes Öffnen nur sehr aufwendig zu sichern. Bei Scharnieren, die in das Türblatt integriert sind, ist in der Regel die Steifigkeit des Türblattes nicht ausreichend oder trägt von der Bautiefe sehr stark auf.

Der Erfindung liegt die Aufgabe zugrunde, einen Gehäuseschrank der eingangs genannten Art anzugeben, bei welchem ein möglichst gleichmäßiger Anpreßdruck auf der ganzen Dichtungslänge bei gleichzeitigem einfachem konstruktivem Aufbau erreicht wird.

Diese Aufgabe wird dadurch gelöst, daß das Profil zumindest des auf der Anschlagseite angeordneten, gehäuseseitigen Vertikalholms eine nach außen über Eck offene Ausnehmung aufweist, daß die Vertikalholme mit einem im Türspalt angeordneten Schenkel mit einem nach außen weisenden freien Ende versehen sind, daß die gehäuseseitigen Vertikalholme zumindest an der Anschlagseite jeweils ein über die Ausnehmung des Vertikalholms überstehendes Scharnierlagerauge aufweisen, daß zumindest das Profil des an der Anschlagseite angeordneten türseitigen Vertikalholms mit einer außenbündig mit der Ausnehmung des gehäuseseitigen Vertikalholms abschließenden und in Verlängerung der Lageraugen der Horizontalholme liegenden, kreisrunden Ausnehmung zur Aufnahme von Scharnierbolzen versehen ist, die durch das zugeordnete Lagerauge gesteckt sind, daß die türseitigen Vertikalholme eine Gegenfläche aufweisen, die in geschlossenem Zustand der Flügeltür parallel zum be treffenden Schenkel der gehäuseseitigen Vertikalholme verlaufen, und daß die Dichtungsvorrichtung zwischen dem Schenkel und der Gegenfläche angeordnet ist.

Ein Grundgedanke der Erfindung besteht demnach darin, daß das Schwenkgelenk der Flügeltür in das gehäuseseitige Profil integriert wird, so daß eine Stabilitätserhöhung des Rahmenprofils über nahezu die gesamte Dichtrahmenhöhe erfolgt. Durch diese Maßnahme wird auch über die gesamte Dichtungslänge ein gleichmäßiger Anpreßdruck erreicht und es wird verhindert, daß sich der Rahmen und die Tür zwischen separaten Scharnierpunkten auseinanderwölbt. Es geht auch kein Einbauraum verloren, da durch die Integration die Gelenkteile weder innen noch außen auftragen. Damit geht weder in der lichten Einbaubreite noch beim Anreihen Raum verloren.

Ein weiterer Vorteil ist darin zu sehen, daß die Holme als Meterware hergestellt und bei Bedarf auf das gewünschte Maß zugeschnitten werden können, so daß die gute Dichtwirkung gleichermaßen bei verschiedenen Gehäuseabmessungen gewährleistet ist.

Die Herstellung des Profils der gehäuseseitigen Vertikalholme wird besonders dadurch vereinfacht, daß der im Türspalt angeordnete freie Schenkel als Seitenwand der Ausnehmung dient. Die Ausnehmung stellt somit im Prinzip eine Kammer mit U-förmigen Wänden dar.

Der Zugriff zum Innern des Gehäuseschranks wird dadurch erleichtert, daß der freie Schenkel von innen nach außen unter einem vorgegebenen Neigungswinkel, bevorzugt 45°, verläuft, so daß die Türöffnung abgeschrägt ist und die Türöffnung frei von scharfen Eckkanten ist.

Die Stabilität und Biegesteifigkeit der gehäuseseitigen Vertikalholme wird ferner dadurch weiter erhöht, daß das Profil ein rohrförmiges Kernstück aufweist, an welchem sich die die Ausnehmung begrenzenden Schenkel abstützen. Das Rohrstück kann ferner zur Aufnahme von Zapfen bei der Befestigung der Querholme dienen.

Zur weiteren Vereinfachung und Rationalisierung der Profilherstellung ist es zweckmäßig, daß die riegelseitigen Vertikalholme des Gehäuses das gleiche Profil aufweisen wie die anschlagseitigen Vertikalholme und daß zusätzlich über die gesamte Länge eine in Richtung auf das Gehäuseinnere hinter dem freien Schenkel liegende Schulter ausgebildet ist. Diese Schulter kann zum Eingriff mit einem oder mehreren Riegel(n) dienen.

Für die riegelseitigen Vertikalholme ist es ferner nicht zuletzt aus optischen Gründen vorteilhaft, daß die bei den anschlagseitigen Vertikalholmen vorhandene offene Kammer durch eine Wand geschlossen ist, deren Außenform dem türseitigen, auf der Anschlagseite liegenden Vertikalholm entspricht.

Auf der Riegelseite wird die Dichtwirkung über die ganze Dichtfläche dadurch sichergestellt, daß ein über die gesamte Dichtlänge verlaufender Klappriegel vorhanden ist, der die Schulter des zugehörigen gehäuseseitigen Vertikalholms hintergreift. Der Klappriegel kann auf einfache Weise dadurch betätigt werden, daß er mit einem Exzenterriegel zusammenwirkt, der mit einem Betätigungselement versehen ist.

Um die Montage und den Service von Baueinheiten im Gehäuse zu erleichtern, ist es vorteilhaft, daß die Scharnierbolzen aus demontierbaren, gefederten Bolzen bestehen.

Um einen unbefugten Zugriff auf die Scharnierbolzen zu verhindern, ist es zweckmäßig, daß die türseitigen Vertikalholme im Zugriffsbereich der Bolzen bzw. der zugehörigen Lageraugen abgedeckt sind. Bei geschlossener Tür ist daher eine Manipulation an den Scharnierbolzen ausgeschlossen. Lediglich bei abgeschwenkter Tür können die Scharnierbolzen somit entfernt werden.

Nachfolgend wird die Erfindung anhand von in der Zeichnung dargestellten Ausführungsbeispielen weiter erläutert.

Fig. 1 zeigt schematisch in einer perspektivischen Explosionsdarstellung eine Rahmenkonstruktion für eine Türöffnung und eine zugehörige Flügeltür eines Gehäuseschranks;

Fig. 2 zeigt schematisch einen Horizontalquerschnitt durch ein erstes Beispiel einer Rahmenkonstruktion gemäß der Schnittlinie II-II in Fig.

1;

Fig. 3 zeigt schematisch einen Horizontalquerschnitt eines zweiten Ausführungsbeispiels einer Rahmenkonstruktion;

Fig. 4 zeigt schematisch einen Horizontalquerschnitt eines dritten Ausführungsbeispiels einer Rahmenkonstruktion; und

Fig. 5 zeigt schematisch in einer perspektivischen Explosionsdarstellung eine alternative Ausführung einer Lagerhülse und eines zugehörigen Scharnierbolzens.

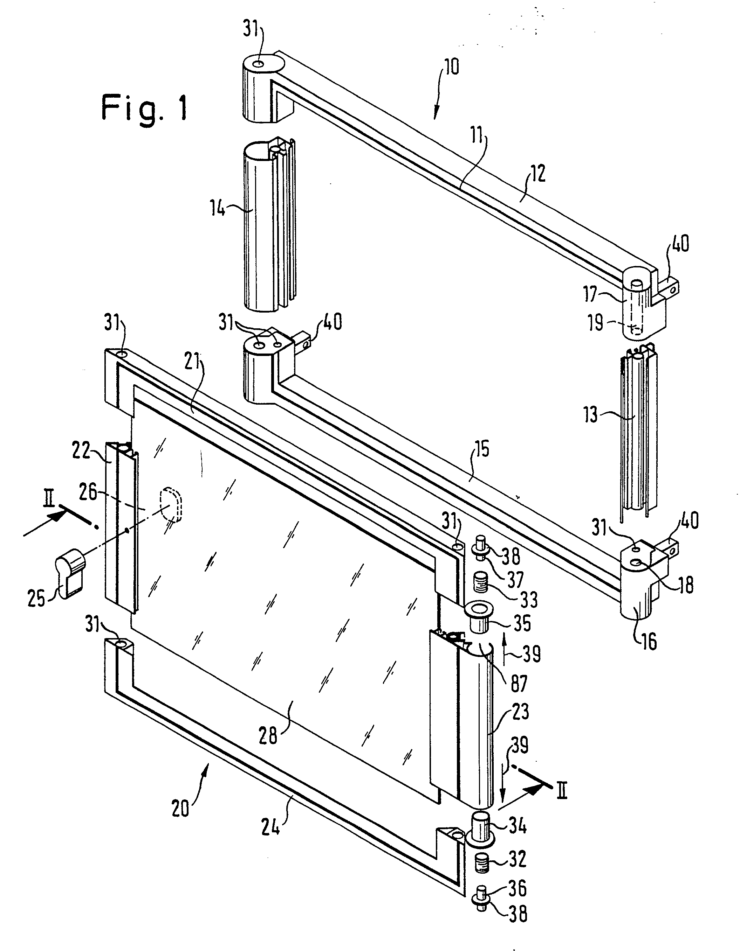

Die in Fig. 1 veranschaulichte Rahmenkonstruktion umfaßt einen gehäuseseitigen Rahmen 10 und einen zugehörigen türseitigen Rahmen 20 für eine Flügeltür. Um die Darstellung übersichtlich zu halten, sind die Seitenwände des Gehäuses nicht wiedergegeben. Die Rahmenkonstruktion wird typisch erweise bei einem Gehäuseschrank zur Aufnahme von hochwertigen Baueinheiten eingesetzt. Wandteile oder ähnliches werden über Ansätze 40 am gehäuseseitigen Rahmen 10 befestigt.

Der gehäuseseitige Rahmen 10 umfaßt einen oberen Horizontalholm 12 und einen unteren Horizontalholm 15 sowie einen anschlagseitigen Vertikalholm 13 und einen riegelseitigen Vertikalholm 14. Der türseitige Rahmen 20 ist aus einem oberen Horizontalholm 21, einem unteren Horizontalholm 24, einem riegelseitigen Vertikalholm 22 sowie einem anschlagseitigen Vertikalholm 23 zusammengesetzt. Die vorstehend aufgeführten Horizontalholme sind jeweils über einen Eckstumpfstoß mit den Vertikalholmen verbunden, wobei die Horizontalholme über die Vertikalholme überstehen und deren Stirnseiten an der Seite der Horizontalholme anliegen. Die Verbindung wird ferner über Zapfen oder Schraubbolzen (nicht dargestellt) hergestellt. Die Holme sind im übrigen als Strangpreßprofil aus Metall oder biegesteifem Kunststoff hergestellt.

Die gehäuseseitigen Horizontalholme sind auf der dem Türanschlag zugeordneten Seite jeweils mit einem Lagerauge 16,17 versehen, welches in demjenigen Bereich liegt, der über den anschlagseitigen Vertikalholm 13 übersteht. Die Lageraugen 16, 17 nehmen in ihren kreisrunden Öffnungen 18,19 jeweils einen Scharnierbolzen 36 bzw. 37 auf, der jeweils über eine Spiralfeder 32 bzw. 33 in axialer Richtung federnd abgestützt ist. Türseitig sind die Scharnierbolzen 36,37 in Lagerhülsen 34 bzw. 35 gesteckt, die vom anschlagseitigen Vertikalholm 23 aufgenommen sind.

Mit 31 sind Öffnungen in den Horizontalholmen 12,15,21 und 24 bezeichnet, die für die Bolzenverbindung vorbereitet sind. Diese Öffnungen sind als Schraubkanal mit einem Innengewinde zur Aufnahme der Schraubbolzen ausgebildet.

Auf dem gehäuseseitigen Rahmen 10 befindet sich im Türspalt ein Dichtungsstreifen 11 aus einem elastischen Dichtungsmaterial, der im gesamten Türspalt umläuft und der in geschlossenem Zustand des türseitigen Rahmens 20 staubdicht zusammengepreßt wird.

Der türseitige Rahmen 20 ist mit einer Türfüllung 28 versehen, die beispielsweise aus transparentem Kunststoff bestehen kann, wenn die Notwendigkeit besteht, den Behälter-Inhalt zu überwachen. Ansonsten kann die Türfüllung 28 auch aus einem Blech bestehen.

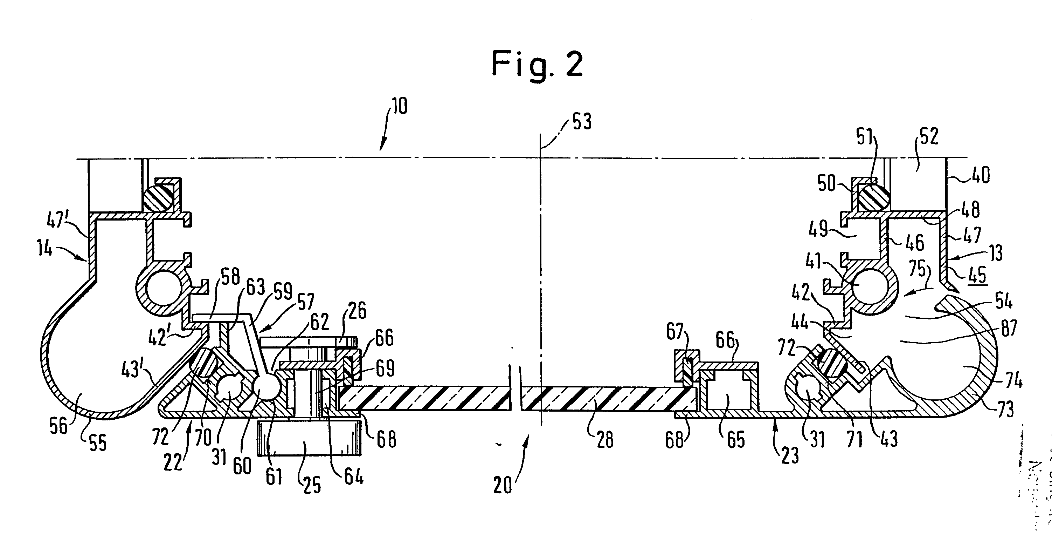

Im riegelseitigen Vertikalholm 22 des türseitigen Rahmens 20 ist eine als Handhebel 25 ausgebildete Betätigungsvorrichtung für einen Exzenterriegel 26, der auf der Innenseite des Vertikalholms 22 liegt, vorgesehen. Die Funktion des Exzenterriegels 26 wird im Zusammenhang mit Fig. 2 im einzelnen beschrieben.

Wenn der türseitige Rahmen 20 am gehäuseseitigen Rahmen 10 angelenkt ist, sind die Spiralfedern 32, 33 entspannt und drücken dabei die Scharnierbolzen 36, 37 axial nach außen, wobei sie sich einerseits in den zugehörigen Lagerhülsen 34, 35 und andererseits an Scheiben 38 abstützen, die jeweils auf den Scharnierbolzen 36, 37 befestigt sind. In diesem Zustand ragt ein Teil der Scharnierbolzen 36, 37 in die zugehörigen Öffnungen 19 bzw. 18, während der andere Teil im anschlagseitigen Vertikalholm 22 des türseitigen Rahmens 20 steckt. Um den türseitigen Rahmen 20 vom gehäuseseitigen Rahmen 10 zu entfernen, können die Scharnierbolzen 36,37 durch axialen Druck gemäß den Pfeilen 39 durch die Lagerhülsen 34, 35 hindurch und gegen den Druck der Spiralfedern 32, 33 soweit zurückgeschoben werden, daß der türseitige Rahmen 20 aus den Lageraugen 16, 17 entfernt werden kann. Der Zugang zu den Scharnierbolzen 37, 38 erfolgt hierbei über einen Längsschlitz 87 im türseitigen Vertikalholm 23, der nur bei geöffneter Tür zugänglich ist.

In den nachfolgenden Figuren sind gleiche Teile mit gleichen Bezugszeichen versehen.

Der anschlagseitige Vertikalholm 13 auf der Gehäuseseite weist gemäß Fig. 2 ein Hohlprofil auf, das ein Rohrstück 41, eine Außenschulter 42, die sich in das Gehäuseinnere erstreckt, einen im Anschluß an die Außenschulter 42 ausgebildeten Schenkel 43, der im Türspalt angeordnet und dessen freies Ende nach außen gerichtet ist, sowie eine über Eck nach außen geöffnete Ausnehmung 44, die auf einer Seite vom Schenkel 43 begrenzt wird, aufweist. Die Ausnehmung 44 wird ferner durch ein U-Stück 45 begrenzt, das mit einem innen liegenden Schenkel am Rohrstück 41 angesetzt ist und dessen Außenschenkel 47 mit seinem freien Ende dem Schenkel 43 gegenüberliegt. An dem den Innenschenkel 46 und den Aussenschenkel 47 verbindenden Zwischenstück 48 sind die Ansätze 40 angebracht. In seitlicher, nach innen gerichteter Verlängerung des Innenschenkels 46 ist eine T-Nut 49 ausgeformt, in welcher Schiebemuttern zur Befestigung von Gehäuseunterteilungen oder ähnlichem verankert werden können. Ferner ist ein Schenkel der T-Nut 49 mit einem L-förmigen Schienenstück 50 zur Aufnahme eines ersten Dichtstranges 51 verbunden, der elastisch gegen eine seitliche Abdeckplatte 52 angedrückt ist, die auf dem Ansatz 40 befestigt ist.

Der von der Schulter 42 abstehende Schenkel 43 ist unter einem Winkel von etwa 45° gegenüber einer Mittenlinie 53 geneigt.

Das Profil des riegelseitigen Vertikalholms 14 ist seitenverkehrt zum Profil des anschlagseitigen Vertikalholms 13 ausgebildet. Anstelle der zwischen dem Schenkel 43 und dem U-Stück 45 gebildeten Öffnung 54 befindet sich auf der Riegelseite jedoch ein kreisbogenförmiges Profilstück 55 zur Verbindung der freien Enden der Schenkel 43 und 47, so daß also ein geschlossener Hohlraum 56 entsteht.

Am riegelseitigen Vertikalholm 22 der Flügeltür ist über die gesamte Holmlänge ein Klappriegel 57 ausgebildet, der einen etwa L-förmigen Querschnitt mit einem vorderen und einem hinteren Schenkel 58,59 aufweist. Im geschlossenen Zustand hintergreift der vordere Schenkel 58 die Schulter 42' des riegelseitigen Vertikalholms 14 auf der Gehäuseseite. Er wird in diese Stellung mit Hilfe des Exzenterriegels 26 gebracht und dort gehalten, indem der Exzenterriegel 26 den hinteren Schenkel 59 des Klappriegels 57 beaufschlagt. Zum Öffnen wird der Exzenterriegel 26 über die Handhabe 25 verdreht, so daß er außer Eingriff mit dem hinteren Schenkel 59 gelangt. Wird dann der türseitige Rahmen 20 nach außen, d.h. in der Zeichenebene nach unten, gezogen, so kann der Klappriegel 57 im Uhrzeigersinn abschwenken, wobei er über ein zylindrisches Ende 60 in einer entsprechenden kreisrunden Ausnehmung 61 mit einer schlitzförmigen Öffnung 62 im Vertikalholm 22 geführt wird. Die Schwenkbewegung wird nach beiden Richtungen durch die Ränder der Öffnung 62 begrenzt, die als Anschlag dienen. Der vordere Schenkel 58 ist in seiner Schließstellung über seine gesamte Länge auf einem Ansatz 63 abgestützt, der vom türseitigen Vertikalholm 22 frei absteht.

An den sich gegenüberliegenden Rändern sind die beiden türseitigen Vertikalholme 22,23 mit T-Nuten 64 bzw. 65 versehen, die in derselben Weise wie die T-Nut 49 durch zwei seitliche L-Schenkel unter Bildung eines sich in das Gehäuseinnere öffnenden Schlitzes gebildet wird. In diesen beiden Schienen 64,65 sind Befestigungselemente 66 verschraubt, welche von innen über den Rand der Türfüllung überstehen und diese über eine elastische Dichtung 67 gegen eine Auflage 68 am Innenrand der türseitigen Vertikalholme 22,23 haltend andrücken. Durch die T-Nut 64 am riegelseitigen Vertikalholm 22 verläuft ferner ein Verbindungsstück 69 zwischen der Handhabe 25 und dem Exzenterriegel 26, wobei die beiden L-Schenkel der T-Nut 64 das Verbindungsstück 69 seitlich stützen.

Sowohl im riegelseitigen als auch im anschlagseitigen Vertikalholm 22,23 ist eine Vertikalnut 70,71 ausgebildet, deren Öffnungen im geschlossenen Zustand der Flügeltür den gehäuseseitigen Schenkeln 43,43' der betreffenden Vertikalholme 13,14 gegenüberliegen. In den Vertikalnuten 70,71 ist mit Überstand ein elastischer Dichtstrang 72 gehalten, der in geschlossenem Zustand an die Schenkel 43,43' staubdicht angedrückt ist.

Der anschlagseitige Vertikalholm 23 der Flügeltür ist über seine gesamte Länge mit einem kreisbogenförmigen Ansatz 73 versehen, der in geschlossenem Zustand der Flügeltür außenbündig mit dem Außenschenkel 47 des gehäuseseitigen U- Stückes 45 abschließt. Der kreisbogenförmige Ansatz 73 bildet innen einen kreisrunden Hohlraum 74, der an seinen beiden Stirnseiten zur Aufnahme der Lagerhülsen 34 dient. Der kreisbogenförmige Ansatz 73 bzw. die Ausnehmung 74 ist somit koaxial zu den gehäuseseitigen Öffnungen 18,19 und den Scharnierbolzen 36,37 angeordnet und liegt zwischen den Lageraugen 16,17. Beim Öffnen der Flügeltür bewegt sich das freie Ende des kreisbogenförmigen Ansatzes 73 gemäß Pfeil 75 auf einer Kreisbahn in die Ausnehmung 44 hinein, wobei der vom Ansatz 73 gebildete Außenzylinder sich in gleichbleibendem Abstand vom freien Ende des gehäuseseitigen Außenschenkels 47 entlang bewegt. Bei dieser Bewegung wird auch der Längsschlitz 87 zwischen dem freien Ende des Ansatzes 73 und dem gegenüberliegenden Rand zugänglich, um die Scharnierbolzen lösen zu können.

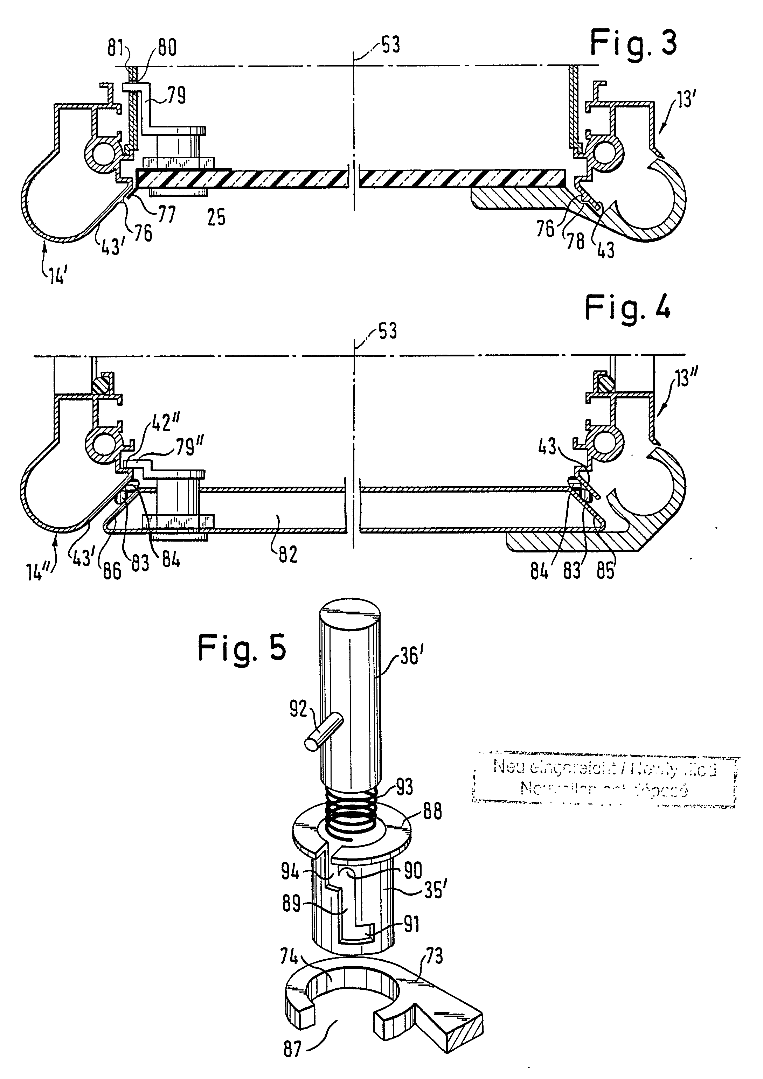

In Fig. 3 ist veranschaulicht, daß der freie Schenkel 43,43' der beiden gehäuseseitigen Vertikalholme 13',14' mit einer Kante 76 versehen ist, die sich über die gesamte Holmlänge erstreckt. Im geschlossenen Zustand der Flügeltür ist diese Kante 76 in formschlüssigem und dichtendem Eingriff mit einer türseitigen Federleiste 77 (auf der Riegelseite) und einem Ansatz 78 (auf der türseitigen Anschlagseite) gehalten.

Beim Beispiel gemäß Fig. 3 ist ferner anstelle eines Klappriegels ein Schwenkriegel 79 vorhanden, der mit einer Ausnehmung 80 in einem gehäuseseitigen Wandteil 81 zusammenwirkt.

Gemäß Fig. 4 ist am türseitigen und anschlagseitigen Vertikalholm 13'',14'' eine als Hohlprofil ausgebildete Flügeltür 82 angeordnet, die über einen Schwenkriegel 79'', der die Schulter 42'' des betreffenden gehäuseseitigen Vertikalholms 14'' hin- tergreift, verriegelbar ist. Das Hohlprofil der Flügeltür 82 ist an seinen Schmalseiten parallel zum Verlauf der gehäuseseitigen freien Schenkel 43,43' abgeschrägt. Zur Überbrückung von Unebenheiten und Bauteiltoleranzen sind zwei nebeneinander liegende Dichtungsstränge 83,84 an den Abschrägungen 85,86 der Flügeltür 82 angeordnet.

In Fig. 5 ist eine Alternative der lösbaren Scharnierbolzenanordnung veranschaulicht, wie sie bereits im Zusammenhang mit Fig. 1 beschrieben wurde. In Fig. 5 ist die der Oberseite der Türe zugeordnete Anordnung beschrieben. Die Lagerhülse 35' ist an ihrem oberen Rand mit einem außen überstehenden Ring 88 versehen, mit welchen sie sich auf den Rand des türseitigen kreisbogenförmigen Ansatzes 73 in axialer Richtung abstützt wenn der rohrförmige Teil der Hülse 35' in die türseitige Ausnehmung 74 gesteckt ist. Im Unterschied zu dem in Fig. 1 beschriebenen Beispiel ist der rohrförmige Teil der Hülse 35' in einem in Achsrichtung verlaufenden Schlitz 89 versehen, der an seinem unteren Ende zur Bildung einer Rastkante mit einem in Umfangsrichtung verlaufenden Querschlitz 91 versehen ist. Der Schlitz 89 sowie die Querschlitze 91 dienen zur Aufnahme eines Radialstiftes 92 am Scharnierbolzen 36'; über den Radialstift 92 kann der Scharnierbolzen 36' in der Lagerhülse 35' axial verschoben werden, indem der Radialstift 92 durch Handbetätigung im Schlitz 89 verschoben wird. Durch eine Drehung in den Querschlitz 91 wird der Scharnierbolzen 36' in seiner unteren Endlage fixiert. Durch einen oberen Anschlag 90 wird der Scharnierbolzen 36' in einer Position gehalten, in welcher er über die Lagerhülse 35' vorsteht, so daß er in ein entsprechendes gehäuseseitiges Scharnierteil eingreifen kann. In einer durch den Querschlitz 91 vorgegebenen Position schließt der Scharnierbolzen 36' bündig mit dem Ring 88 ab, so daß die zugehörige Türe außer Eingriff mit der Gehäuseseite gelangt und entfernt werden kann. Der Scharnierbolzen 36' ist axial durch eine Spiralfeder 93 vorgespannt, die sich in der Lagerhülse 35' abstützt und die gewährleistet, daß der Scharnierbolzen 36' in seinen beiden Endlagen durch Kraftschluß zwischen dem Radialstift 92 und der Lagerhülse 35' sicher gehalten wird.

Der Schlitz 89 mit seinem Querschlitz 91 und Anschlag 90 sowie der Radialstift 92 befinden sich in montiertem Zustand im Bereich des türseitigen Längsschlitzes 87. Demnach sind sie bei geschlossenem Zustand der Tür von außen nicht zugänglich. Eine Verschiebung des Scharnierbolzens 36' ist somit nur bei offener Türstellung möglich, wenn der türseitige Längsschlitz 87 von außen zugänglich ist.

Für den Zusammenbau der Scharnierbolzenanordnung ist ein Montageschlitz 93 in der Lagerhülse 35' vorhanden, über welchen der Radialstift 92 bei einer Längsbewegung des Scharnierbolzens 36' in den Schlitz 89 geschoben wird.

**Ansprüche**

1. Gehäuseschrank mit einer Flügeltüre, beispielsweise zur Aufnahme von elektronischen Baueinheiten, mit einem gehäuseseitigen Türrahmen zur Begrenzung einer Türöffnung, bestehend aus je zwei Vertikal- und Horizontalholmen mit einem Hohlprofil, mit einem am Türrahmen angelenkten türseitigen Flügelrahmen, bestehend aus je zwei türseitigen Vertikal- und Horizontalholmen, mit einem Hohlprofil sowie mit einer im Türspalt umlaufenden Dichtungsvorrichtung,
dadurch **gekennzeichnet**,
daß das Hohlprofil zumindest des auf der Anschlagseite angeordneten, gehäuseseitigen Vertikalholms (13) eine nach außen über Eck offene Ausnehmung (44) aufweist, daß die gehäuseseitigen Vertikalholme (13,14) mit einem im Türspalt angeordneten Schenkel (43) mit einem nach aussen weisenden freien Ende versehen sind, daß die gehäuseseitigen Vertikalholme (13,14) an der Anschlagseite jeweils ein über die Ausnehmung (44) des betreffenden gehäuseseitigen Vertikalholms (13) überstehendes Scharnierlagerauge (16,17) aufweisen, daß zumindest das Hohlprofil des an der Anschlagseite angeordneten türseitigen Vertikalholms (23) mit einer außenbündig mit der Ausnehmung (44) des gehäuseseitigen Vertikalholms (13) abschließenden und in Verlängerung der Lageraugen (16,17) liegenden, kreisrunden Ausnehmung (74) zur Aufnahme von Scharnierbolzen versehen ist, die durch das zugeordnete Lagerauge (16,17) gesteckt sind, daß die türseitigen Vertikalholme (22,23) eine Gegenfläche aufweisen, die in geschlossenem Zustand der Flügeltüre parallel zum betreffenden Schenkel (43) der gehäuseseitigen Vertikalholme (13,14) verlaufen und daß die Dichtungsvorrichtung zwischen dem gehäuseseitigen Schenkel (43) und der Gegenfläche angeordnet ist.

2. Gehäuseschrank nach Anspruch 1,
dadurch **gekennzeichnet**,
daß der gehäuseseitige freie Schenkel (43) als Seitenwand der Ausnehmung (44) dient.

3. Gehäuseschrank nach Anspruch 2,
dadurch **gekennzeichnet**,
daß der freie Schenkel (43) unter einem Winkel von etwa 45° von innen nach außen geneigt ist.

4. Gehäuseschrank nach einem der vorhergehenden Ansprüche,
dadurch **gekennzeichnet**,
daß das Hohlprofil ein Rohrstück (41) aufweist, an welchem sich der freie Schenkel (43) fußseitig abstützt.

5. Gehäuseschrank nach einem der vorhergehenden Ansprüche,
dadurch **gekennzeichnet**,
daß auf der Gehäuseseite der anschlagseitige und der riegelseitige Vertikalholm ein spiegelbildlich vertauschtes Profil aufweisen und daß der anschlagseitige Vertikalholm zusätzlich über die gesamte Länge eine in Richtung auf das Gehäuseinnere hinter dem freien Schenkel liegende Schulter (42) zum Eingriff mit einem türseitigen Riegel aufweist.

6. Gehäuseschrank nach Anspruch 5,
dadurch **gekennzeichnet**,
daß der riegelseitige Vertikalholm (14) in Verlängerung des Schenkels (43) geschlossen ist.

7. Gehäuseschrank nach einem der vorhergehenden Ansprüche,
dadurch **gekennzeichnet**,
daß türseitig ein über die gesamte Dichtlänge verlaufen der Klappriegel (57) vorhanden ist, der die Schulter (42) des zugehörigen gehäuseseitigen Vertikalholms (14) hintergreift.

8. Gehäuseschrank nach Anspruch 7,
dadurch **gekennzeichnet**,
daß der Klappriegel (57) mit einem Exzenterriegel (26) zusammenwirkt, der mit einer Handhabe (25) versehen ist.

9. Gehäuseschrank nach einem der vorhergehenden Ansprüche,
dadurch **gekennzeichnet**,
daß die Scharnierbolzen (36,37) federnd vorgespannt sind, um sie unter axialem Druck außer Eingriff mit den zugehörigen Lageraugen (16,17) zu bringen.

10. Gehäuseschrank nach Anspruch 9,
dadurch **gekennzeichnet**,
daß der Zugriffsbereich auf die Scharnierbolzen (37,38) bzw. der zugehörigen Lageraugen (16,17) türseitig in der Weise abgedeckt sind, daß bei geschlossener Tür ein Zugriff ausgeschlossen und lediglich bei abgeschwenkter Tür ein Zugang möglich ist.

Fig. 1

# Fig. 2

EP 0 355 401 A1

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0016932 (H.G.BAUS) <br> * Seite 4, Zeile 4 - Seite 6, Zeile 15; Figuren 1-3 * <br> --- | 1 | H02B1/38 <br> E06B3/36 |
| A | DE-U-8010810 (JEAN MÜLLER KG) <br> * Seite 9, Zeile 14 - Seite 10, Zeile 23; Figuren 1-3 * <br> --- | 1 | |
| A | DE-A-3609004 (BUNDOPLAST BOPLA GEHÄUSE SYSTEME GMBH) <br> * Spalte 2, Zeilen 14 - 48; Figuren 1-3 * <br> --- | 1 | |
| A | GB-A-1284258 (P.STILLEMANS) <br> * Seite 1, Zeile 44 - Seite 2, Zeile 27; Figuren 1-4 * <br> ----- | 1 | |

**RECHERCHIERTE SACHGEBIETE (Int. Cl.5)**

H02B
E06B
E05D

Der vorliegende Recherchenbericht wurde für alle Patentansprüche erstellt

| Recherchenort | Abschlußdatum der Recherche | Prüfer |
|---|---|---|
| DEN HAAG | 28 SEPTEMBER 1989 | WOODALL C.G. |

EPO FORM 1503 03.82 (P0403)